## Europäisches Patentamt

## European Patent Office

## Office européen des brevets

(11) Veröffentlichungsnummer: **0 108 889**
**A2**

(12) **EUROPÄISCHE PATENTANMELDUNG**

(21) Anmeldenummer: **83109255.6**

(22) Anmeldetag: **19.09.83**

(51) Int. Cl.³: **G 01 B 11/06**, B 41 F 33/00

(30) Priorität: **19.10.82 DE 3238704**

(43) Veröffentlichungstag der Anmeldung: **23.05.84**
Patentblatt 84/21

(84) Benannte Vertragsstaaten: **CH DE FR GB LI SE**

(71) Anmelder: **grapho metronic Mess- und Regeltechnik GmbH & Co. KG, Franz-Prüller-Strasse 15, D-8000 München 80 (DE)**

(72) Erfinder: **Wirz, Burkhardt, Dr.-Ing., Rabenkopfstrasse 41, D-8000 München 90 (DE)**
Erfinder: **Kammüller, Reiner, Prof. Dr.-Ing., Breslauerstrasse 4a, D-5901 Wilnsdorf/Obersdorf 5 (DE)**

(74) Vertreter: **Kern, Wolfgang Dipl.-Ing. et al, Patentanwälte Tischer, Kern & Brehm Albert-Rosshaupter-Strasse 65, D-8000 München 70 (DE)**

(54) **Vorrichtung zum Gewinnen eines Masses für die Feuchtmittelschichtdicke auf Offsetdruckplatten.**

㉗ In einer Vorrichtung zum Gewinnen eines Maßes für die Feuchtmittelschichtdicke auf Offsetdruckplatten mittels optischer Strahlung in einem Absorptionswellenlängenband des Feuchtmittels ist es üblich, ein gerichtetes Strahlenbündel auf einen quasi punktförmigen Fleck auf der Platte von einer Strahlungsquelle zu richten und Remissionsstrahlung mit einem bezüglich der Stellung der Strahlungsquelle zur Platte unter einem bestimmten Winkel angeordneten Strahlungsdetektor aufzufangen. Zur Unterdrückung des Glanzeinflusses soll der Aufstrahlöffnungswinkel des auf den Fleck auf der Platte (22) gerichteten Strahls höchstens 20° betragen, während zwischen dem im Meßfleck (21) geometrisch reflektierten Aufstrahlbündel (20) und dem auf den Empfänger (27) gelenkten Strahlungsbündel ein verbotener Winkelabstand (v) von solcher Größe einzuhalten ist, daß der Glanzanteil im Empfängersignal vernachlässigbar ist. Senkrechte Aufstrahlung auf den Meßfleck ist vorteilhaft.

Firma

grapho metronic Meß- und Regeltechnik GmbH & Co. KG
8000 München 80

Vorrichtung zum Gewinnen eines Maßes für die Feuchtmittelschichtdicke auf Offsetdruckplatten

Die Erfindung betrifft eine Vorrichtung zum Gewinnen eines Maßes für die Feuchtmittelschichtdicke auf Offsetdruckplatten gemäß Oberbegriff des Hauptanspruches.

Die Bemühungen, mittels optischer Strahlung in einem Absorptionswellenlängenband des Feuchtmittels ein zuverlässiges Maß für die Feuchtmittelschichtdicke eines bildfreien Bereiches auf der Druckplatte zu erhalten, sind bereits alt, wie es z.B. die DE-PS 1 303 819 erkennen läßt, und vielfältig. Sie haben jedoch, da es sich um ein berührungsfreies optisches Meßververfahren bei sehr hohen Geschwindigkeiten handelt, bei dem unterschiedliche plattenspezifische Eigenschaften eingehen, noch nicht zu zufriedenstellenden Ergebnissen geführt, mit denen die hohen Anforderungen, die an die modernen Mehrfarbendrucke gestellt werden, erfüllt sind. Insbesondere mußte festgestellt werden, daß unterschiedliche Rauhigkeiten der Plattenoberfläche und verschiedene Feuchtmittelschichtdicken Meßergebnisse lieferten, die keinen eindeutigen Zusammenhang mit der Schichtdicke hatten.

Durch Überlegungen und Versuche hat die Anmelderin herausgefunden, daß die Reflexion des auf den Meßfleck aufgestrahlten Strahlenbündels an der Oberfläche des Feuchtmittels, der sogenannte Glanz, einen wesentlichen Anteil an den das Meßergebnis verfälschenden, nicht vorherbestimmbaren Einflüssen hat.

Es liegt deshalb der Erfindung die Aufgabe zugrunde, eine Vorrichtung der eingangs aufgeführten Art in der Weise zu gestalten, daß der Anteil des Glanzes im vom Strahlungsdetektor aufgenommenen Signal möglichst klein und so gering ist, daß sein das Meßergebnis beeinträchtigender Einfluß vernachlässigt werden kann oder zumindest von untergeordneter Bedeutung ist.

Die Lösung dieser Aufgabe geschieht mit den kennzeichnenden Merkmalen des Hauptanspruches.

Damit der Glanzanteil in dem für die Auswertung aufgenommenen, vom Meßfleck auf der Platte reflektierten Anteil des aufgestrahlten Strahlungsbündels hinreichend klein ist, genügt es nicht, den Strahlungsdetektor außerhalb des Reflexionswinkels des eingestrahlten Strahlungsbündels anzuordnen. Darüber hinaus kann mit Hinblick auf einen ausreichenden Signal/Rausch-Abstand des Nutzsignals und in Anbetracht der Kürze der zur Verfügung stehenden Zeit beim modernen Hochgeschwindigkeitsoffsetdruck keine nur punktförmige Lichtquelle verwendet werden, die auf den sehr kleinen Meßfleck nur einen praktisch parallelen Strahl aufstrahlt. Die Strahlungsquelle muß, damit sie ausreichend starke Energie für den Meßvorgang abstrahlt, eine bestimmte räumliche Ausdehnung haben. Des weiteren ist es ebenfalls aus energetischen Gründen nicht möglich, nur einen sehr schmalen Ausschnitt aus der vom Meßfleck auf der Platte remittierten Strahlung aufzunehmen, da auch dann kein zuverlässiges Meßsignal über dem Rauschpegel mehr erhalten wird, das eine einwandfreie Auswertung zuläßt.

Es ist ferner erforderlich, die durch die Plattenrauhigkeit entstehende Oberflächenunebenheit der sehr dünnen Feuchtmittelschicht ebenfalls zu berücksichtigen, da sonst, wenn von dem Glanz als reine Reflexionskomponente an einer zur Plattenoberfläche parallelen ebenen Schicht ausgegangen wird, weitere Fehlergrößen auftreten. Die für letztere Einflüsse maßgeblichen Überlegungen sollen kurz anhand der Fig. dargelegt werden, die eine schematisierte Wiedergabe der Reflexions- und Remissionsverhältnisse an Feuchtmittelschicht und Plattenoberfläche darstellt.

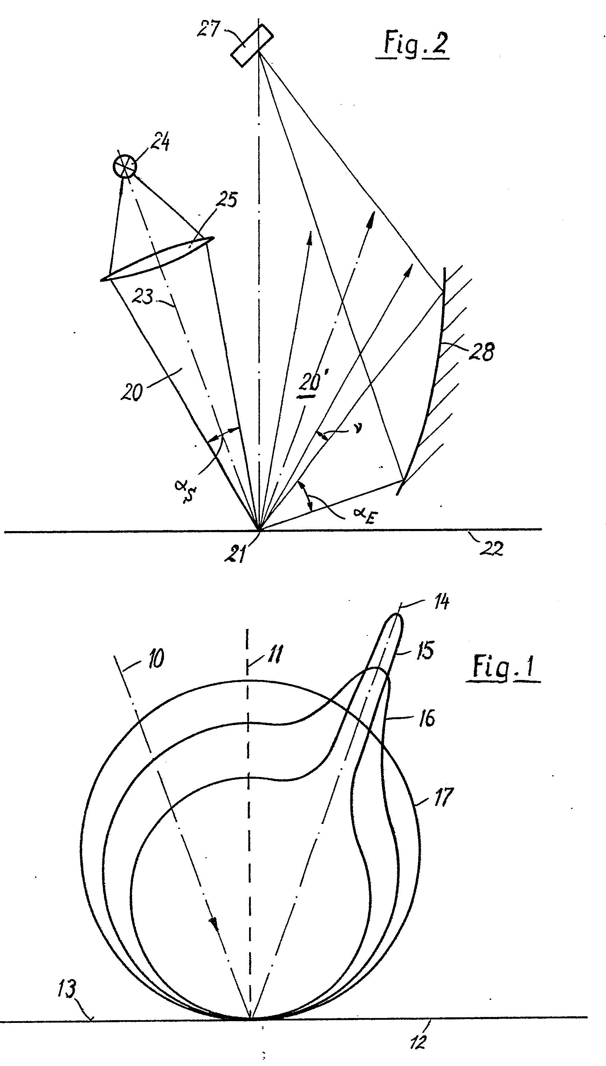

In der Fig. 1 ist ein einfallender Strahl 10 dargestellt, der mit der Normalen 11 auf der Oberfläche der Druckplatte 12 einen spitzen Winkel einschließt. Auf der bestimmte Rauhigkeitsspitzen aufweisenden Oberfläche der Druckplatte 12 befindet sich eine mit 13 bezeichnete Feuchtmittelschicht, die bei unterschiedlicher Dicke verschiedene Pegelstände über der Plattenoberfläche hat, die wegen ihrer geringen Stärke nicht dargestellt werden können. Die Adhäsionskräfte des Feuchtmittels bewirken, daß die Oberflächen bei verschiedenen Feuchtmittelschichtdicken und abhängig vom Rauhigkeitsgrad der Platte 12 mehr oder weniger uneben sind, wobei bei einer relativ dicken Schicht von einer glatten Oberfläche ausgegangen werden kann, an der ein Teil des einfallenden Strahls 10, nämlich der Glanzanteil 14, unter einem dem Einfallswinkel zur Normalen 11 gleichen Ausfallwinkel reflektiert wird.

Weist die Oberfläche des Feuchtmittels bereits eine leichte Welligkeit auf, wie dies bei dünnerer Schicht der Fall ist, so wird der Glanzanteil des einfallenden Strahls 10 nicht mehr eindeutig in einer Richtung reflektiert, sondern zu einem Teil etwas außerhalb dieser Richtung, was durch den in Richtung des Ausfallstrahls weisenden Teil der Indikatrix 15 zum Ausdruck gebracht ist. Bei sehr dünner Feuchtmittelschicht ist die Welligkeit der Feuchtmitteloberfläche noch höher, so daß auch in der Indikatrix 16 der Glanzanteil breiter ausfällt.

Schließlich zeigt eine Indikatrix 17 über der als ideal rauh angenommenen Oberfläche der trockenen Platte 12 Kugelform.

Die vorstehenden Betrachtungen beziehen sich auf einen eindimensionalen Einfallsstrahl. Es ist jedoch gemäß obigen Darlegungen noch zu berücksichtigen, daß aus energetischen Gründen mit einem gewissen Aufstrahlöffnungswinkel gerechnet werden muß, der selbstverständlich eine entsprechende Glanzreflexion an der jeweiligen Oberfläche des Feuchtmittels nach sich zieht, wodurch die Glanzanteile der Indikatrices 14, 15, 16 aufgespreizt werden.

Die Anmelderin hat nun, um mit dem Strahlungsdetektor der Feuchtmittelschichtdicken-Meßvorrichtung einen nur möglichst geringen Glanzanteil, dagegen einen hohen Anteil an von der rauhen Plattenoberfläche remittierter Strahlung, die somit die Feuchtmittelschicht durchlaufen hat und aus der ein Maß für die Schichtdicke ableitbar ist, zu messen, die Forderung aufgestellt, daß ein "verbotener" Winkel einzuhalten ist zwischen dem vom Detektor aufgenommenen Sektor der Remissionsstrahlung von der Plattenoberfläche im Meßfleck und dem Reflexionsstrahl der Achse des Aufstrahl-Strahlungsbündels. Ferner ist, um ein brauchbares Signal zu erhalten, zwar ein möglichst großer Empfängeröffnungswinkel zu wählen, der jedoch im Hinblick auf die Beeinflussung durch Glanz ein oberes Maß nicht überschreiten darf. Schließlich darf außerdem, damit der Glanzanteil im Meßsignal auch bei sehr dünnen und damit stark welligen Oberflächen der Feuchtmittelschicht nicht meßwertverfälschend zu Buche schlägt, der Aufstrahlöffnungswinkel des einfallenden Strahlungsbündels ein gewisses oberes Maß nicht überschreiten.

Es ergeben sich somit als erfindungsgemäße Lösung die mit den kennzeichnenden Merkmalen des Hauptanspruchs charakterisierten Bestimmungsgrößen, die selbstverständlich als Grenzbereiche und nicht als scharfe Grenzlinien verstanden werden müssen.

Besonders vorteilhafte Ausführungsformen sind durch die Unteransprüche gekennzeichnet.

Die Zeichnung zeigt im einzelnen in

Fig. 1    ein Schemabild mit Indikatrices über der auf der Druckplatte befindlichen Feuchtmittelschicht bei verschiedenen Schichtdicken zur Erläuterung der Glanzverhältnisse und

Fig. 2    eine schematisierte, ebene Skizze der räumlichen Verhältnisse einer bevorzugten Lösung der erfindungsgemäßen Vorrichtung.

Gemäß Fig. 2 wird auf einen Meßfleck 21 der Druckplatte 22 ein Srahl 20 mit Mittelachse 23 gerichtet. Die Strahlung selbst wird von einer Strahlungsquelle 24 durch eine Sammeloptik 25 hindurch abgegeben, so daß das Aufstrahlbündel einen spitzen Aufstrahlöffnungswinkel $\alpha_S$ hat. Eine einen Sektor der vom Meßfleck 21 remittierten Strahlung auf einem Detektor 27 abbildende Spiegeloptik 28 besitzt eine elliptische Krümmung, wobei der Meßfleck 21 in dem einen und der Detektor 27 in dem anderen Brennpunkt der Ellipse liegt. Der Empfängeröffnungswinkel $\alpha_E$ des von dem Ellipsenspiegel 28 aufgenommenen Remissionsstrahlungssektors hält von dem - bei Annahme geometrischer Reflexion des Aufstrahlbündels 20 - reflektierten Strahlungsbündel 20' den Winkelabstand eines verbotenen Winkel $\nu$ , wodurch verhindert wird, daß der Detektor 27 einen nennenswerten Glanzanteil aufnimmt.

Es versteht sich, daß bei der Auswahl und der Zusammenstellung der Grenzwerte der einzelnen Winkel in vernünftiger Weise vorgegangen werden muß, um einerseits der Forderung nach Glanzunterdrückung und andererseits nach einem möglichst hohen Signal-Rauschabstand gerecht zu werden.

Firma

grapho metronic Meß- und Regeltechnik
GmbH & Co. KG
8000 München 80

Vorrichtung zum Gewinnen ·eines Maßes für die Feuchtmittelschichtdicke auf Offsetdruckplatten

## PATENTANSPRÜCHE

1.   Vorrichtung zum Gewinnen eines Maßes für die Feuchtmittelschichtdicke auf Offsetdruckplatten mittels optischer
Strahlung in einem Absorptionswellenlängenband des Feuchtmittels mit einer ein gerichtetes Strahlungsbündel auf einen
quasi punktförmigen Fleck auf der Druckplatte abgebenden
Strahlungsquelle und einem bezüglich der Stellung der Strahlungsquelle zur Platte unter einem bestimmten Winkel angeordneten Strahlungsdetektor, dadurch gekennzeichnet, daß der
Aufstrahlöffnungswinkel ($\alpha_S$) des auf den Fleck (21) auf der
Platte (22) gerichteten Strahls (20) höchsten 20° beträgt, und
daß zwischen dem im Meßfleck (21) auf der Platte (22) bei
Annahme geometrischer Reflexion reflektierten Strahlungsbündel (20') und dem Winkel-Bereich (29) eines vom Meßfleck
ausgehenden und zum Detektor (27) gelangenden Remissionsstrahlungsbündels ein so großer Abstandswinkel ($\nu$) ·eingehalten ist, daß ein vom Detektor (27) mit empfangener Glanzanteil
vernachlässigbar ist.

2.   Vorrichtung nach Anspruch 1, dadurch gekennzeichnet,
daß der Aufstrahlöffnungswinkel $\alpha_S \leq 10°$ ist.

3.   Vorrichtung nach Anspruch 2, dadurch gekennzeichnet,
daß der Aufstrahlöffnungswinkel ($\alpha_S$) etwa 5° beträgt.

0108889

4.     Vorrichtung nach einem der Ansprüche 1 bis 3, dadurch gekennzeichnet, daß der Abstandswinkel ( ν) etwa 10° beträgt.

5.     Vorrichtung nach einem der Ansprüche 1 bis 4, dadurch gekennzeichnet, daß die Mittelachse (23) des Aufstrahlbündels (20) auf der Ebene der Platte (22) im Meßfleck (21) senkrecht steht.

0108889

Fig.2

27

24

25

23

20

20'

28

ν

$\alpha_S$

$\alpha_E$

21

22

14

15

10

11

Fig.1

16

17

13

12